# EUROPÄISCHE PATENTSCHRIFT

(11) **EP 1 152 134 B1**
(45) Veröffentlichungstag und Bekanntmachung des Hinweises auf die Patenterteilung: **21.12.2005**
(21) Anmeldenummer: 01103300.8
(22) Anmeldetag: 13.02.2001
(51) Int. Cl.: F01N 3/32

(54) **Sekundärluftgebläse für eine Brennkraftmaschine**
Secondary air blower for an internal combustion engine
Compresseur d'air secondaire pour moteur à combustion interne

(30) Priorität: 06.05.2000 DE 10022208
(43) Veröffentlichungstag der Anmeldung: 07.11.2001
(73) Patentinhaber: Pierburg GmbH, 41460 Neuss (DE)
(72) Erfinder: Muckelmann, Klaus, 40723 Hilden (DE); Rösgen, Thomas, 41516 Grevenbroich (DE)
(74) Vertreter: Ter Smitten, Hans

(56) Entgegenhaltungen:
- DE-A- 4 440 495
- PATENT ABSTRACTS OF JAPAN vol. 1997, no. 06, 30. Juni 1997 (1997-06-30) & JP 09 053438 A (TOYOTA AUTOM LOOM WORKS LTD;PACIFIC IND CO LTD), 25. Februar 1997 (1997-02-25)

## Beschreibung

Die Erfindung betrifft ein Sekundärluftgebläse für eine Brennkraftmaschine mit einem Gehäuse in dem eine Motoreinheit und eine durch die Motoreinheit angetriebene Pumpeneinheit angeordnet sind, wobei das Gehäuse einen Lufteinlaßkanal und einen Luftauslaßkanal aufweist, mit einem Luftmassensensor, der in einem dieser Kanäle angeordnet ist und über eine Elektronikeinheit die Motoreinheit regelt.

Derartige Sekundärluftgebläse sind hinlänglich bekannt, siehe zum Beispiel JP 9053438. Das Sekundärluftgebläse dient dazu, unverbrauchte Brennstoffanteile in der Kaltstartphase durch Einblasung von Frischluft ins Abgas nachzuoxidieren und auf diese Weise den Schadstoffausstoß zu minimieren. Der Luftmassensensor liefert dabei den Ist-Wert des Luftmassenstroms und leitet diesen Ist-Wert zur Elektronikeinheit weiter, die einerseits mit dem Motor des Sekundärluftgebläses und andererseits mit einer übergeordneten Rechnereinheit, beispielsweise einem Motorsteuergerät verbunden ist. Nachteilig bei dieser bekannten Ausführungsform sind die Verkabelungen vom Luftmassensensor und vom Gebläsemotor zur Elektronikeinheit, da die Verkabelungen einen erhöhten Montageaufwand verursachen und desweiteren anfällig für Störungen sind. Desweiteren benötigt die Elektronikeinheit Bauraum.

Hiervon ausgehend liegt der Erfindung die Aufgabe zugrunde, ein Sekundärluftgebläse zu schaffen, das die oben genannten Nachteile vermeidet.

Diese Aufgabe wird erfindungsgemäß dadurch gelöst, daß der Luftmassensensor an der Elektronikeinheit angeordnet ist, wobei die Elektronikeinheit an dem Gehäuse und/oder dem Lufteinlaß- bzw. Luftauslaßkanal fixiert ist.

Auf diese Weise entfällt die Verkabelung vom Luftmassensensor zur Elektronikeinheit. Desweiteren findet durch die Anbringung der Elektronikeinheit im Bereich einer der Luftkanäle automatisch eine Kühlung der Elektronikeinheit statt. Dabei ist es besonders vorteilhaft, wenn zu kühlende Teile der Elektronikeinheit in Strömungsrichtung gesehen hinter dem Luftmassensensor angebracht sind, da auf diese Weise der Luftmassenstrom nicht durch den Wärmeaustausch beeinflußt wird. Die Elektronikeinheit benötigt keinen weiteren Bauraum durch die erfindungsgemäße Anbringung.

Ausführungsbeispiele der Erfindung sind in der Zeichnung dargestellt und werden nachfolgend beschrieben.

Hierbei zeigt:
- Figur 1: eine Seitenansicht eines ersten Ausführungsbeispiels der Erfindung mit teilweise aufgebrochenen Luftkanal,
- Figur 2: ein zweites Ausführungsbeispiel mit teilweise aufgebrochenen Luftkanal.

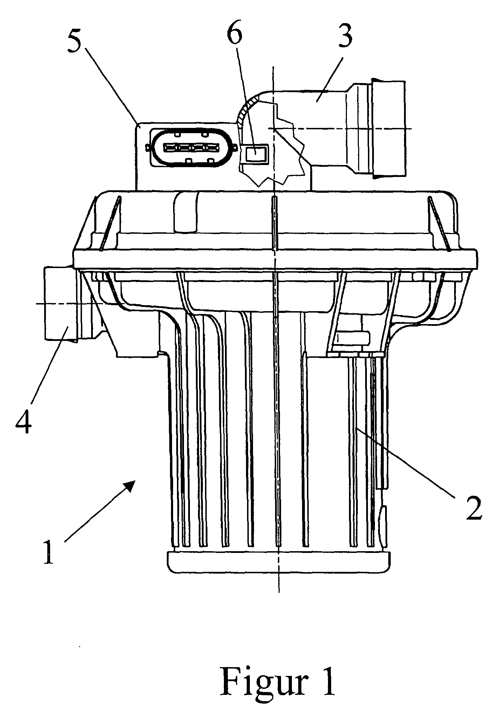

Figur 1 zeigt in einer Seitenansicht das erfindungsgemäße Sekundärluftgebläse 1. Ein Gehäuse 2 des Sekundärluftgebläses 1 weist auf bekannte Weise eine nicht dargestellte Motoreinheit, sowie eine durch die Motoreinheit angetriebene Pumpeneinheit auf. Desweiteren besitzt das Gehäuse einen Lufteinlaßkanal 3, sowie einen Luftauslaßkanal 4.

Auf dem Gehäuse 2 ist nun beispielsweise durch Kleben eine Elektronikeinheit 5 fixiert, an der ein Luftmassensensor 6 derart angeordnet ist, daß der Luftmassensensor 6 in den Lufteinlaßkanal 3 hineinreicht.

Eine derartige Anordnung der Elektronikeinheit 5 mit dem daran fixierten Luftmassensensor 6 ermöglicht ein besonders einfach aufgebautes und störungsunanfälliges Sekundärluftgebläse 1, wobei die Elektronikeinheit 5 keinen zusätzlichen Bauraum beansprucht und gleichzeitig durch den durch den Lufteinlaßkanal 3 strömenden Luftmassenstrom gekühlt wird.

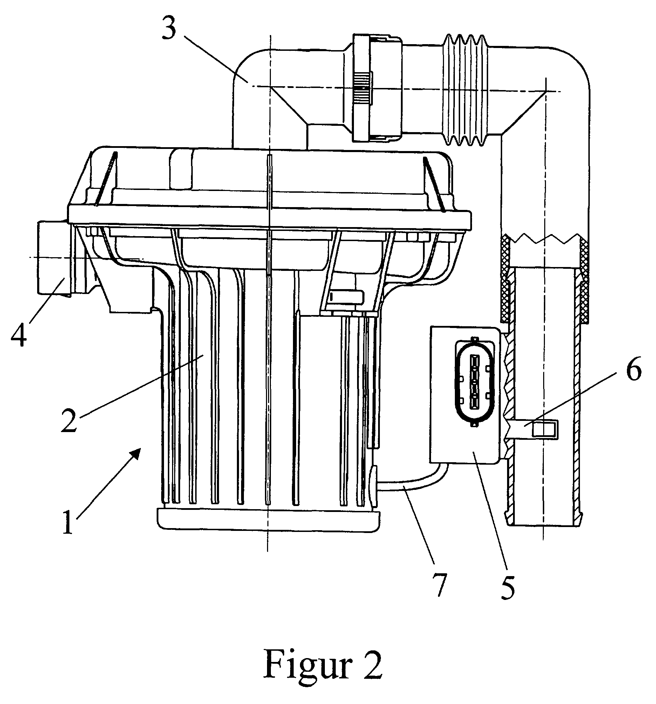

Figur 2 zeigt eine zweite Ausführungsform des erfindungsgemäßen Sekundärluftgebläses 1. Hierbei ist die Elektronikeinheit 5 mit dem Luftmassensensor 6 lediglich an dem Lufteinlaßkanal 3 angeordnet, wobei durch den abgewinkelten Verlauf des Lufteinlaßkanals 3 die Elektronikeinheit den zwischen dem Gehäuse 2 und Lufteinlaßkanal 3 geschaffenen Bauraum nutzt. Über ein außen liegendes Kabel 7 ist die Elektronikeinheit 5 mit der Motoreinheit des Sekundärluftgebläses verbunden.

## Patentansprüche

1. Sekundärluftgebläse (1) für eine Brennkraftmaschine mit einem Gehäuse (2) in dem eine Motoreinheit und eine durch die Motoreinheit angetriebene Pumpeneinheit angeordnet sind, wobei das Gehäuse (2) einen Lufteintaßkanal (3) und einen Luftauslaßkanal (4) aufweist, mit einem Luftmassensensor (6), der in einem dieser Kanäle angeordnet ist und über eine Elektronikeinheit (5) die Motoreinheit regelt, **dadurch gekennzeichnet, daß** der Luftmassensensor (6) an der Elektronikeinheit (5) angeordnet ist, wobei die Elektronikeinheit (5) an dem Gehäuse (2) und/oder dem Lufteinlaß- (3) bzw. Luftauslaßkanal (4) fixiert ist.

2. Sekundärluftgebläse nach Anspruch 1, **dadurch gekennzeichnet, daß** zu kühlende Teile der Elektronikeinheit (5) in Strömungsrichtung gesehen hinter dem Luftmassensensor (6) angeordnet sind.

## Claims

1. Secondary air blower (1) for an internal combustion engine with a housing (2) in which a motor unit and a pump unit, which is driven by the motor unit, are disposed, wherein the housing (2) comprises an air inlet duct (3) and an air outlet duct (4), with an air mass sensor (6) which is disposed in one of these ducts and regulates the motor unit via an electronic unit (5), **characterised in that** the air mass sensor (6) is disposed at the electronic unit (5), wherein the electronic unit (5) is fixed to the housing (2) and/or the air inlet duct (3) or air outlet duct (4).

2. Secondary air blower according to Claim 1, **characterised in that** parts of the electronic unit (5) which are to be cooled are mounted after the air mass sensor (6), viewed in the flow direction.

## Revendications

1. Compresseur d'air secondaire (1) pour un moteur à combustion interne, comprenant un carter (2) dans lequel sont disposées une unité de moteur et une unité de pompe entrainée par l'unité de moteur, le carter (2) présentant un conduit d'admission d'air (3) et un conduit d'échappement d'air (4), avec un capteur de masse d'air (6) qui est disposé dans l'un de ces conduits et régule l'unité de moteur par l'intermédiaire d'une unité électronique (5), **caractérisé en ce que** le capteur de masse d'air (6) est disposé sur l'unité électronique (5), l'unité électronique (5) étant fixée sur le carter (2) et/ou sur Le conduit d'admission d'air (3) ou le conduit d'échappement d'air (4).

2. Compresseur d'air secondaire suivant la revendication 1, **caractérisé en ce que** des parties à refroidir de l'unité électronique (5) sont disposées en aval du capteur de masse d'air (6), vu dans le sens d'écoulement.
